# EUROPEAN PATENT SPECIFICATION

(11) **EP 1 802 695 B1**
(45) Date of publication and mention of the grant of the patent: **01.05.2013**
(21) Application number: 05797236.6
(22) Date of filing: 30.09.2005
(51) Int. Cl.: C08K 7/02, C08K 13/00, C08L 81/06

(54) **POLY(ARYLETHERDISULFONE) COMPOSITION AND SHAPED ARTICLE MADE THEREOF**
POLY(ARYLETHERDISULFON)-ZUSAMMENSETZUNG UND DARAUS HERGESTELLTER FORMKÖRPER
COMPOSITION POLY(ARYLETHERDISULFONE) ET ARTICLE EN FORME CONSTITUE DE CETTE COMPOSITION

(30) Priority: 04.10.2004 US 615023 P; 22.12.2004 EP 04106878; 22.12.2004 EP 04106876; 22.12.2004 EP 04106875; 31.03.2005 EP 05102551; 12.04.2005 US 670266 P
(43) Date of publication of application: 04.07.2007
(73) Proprietor: Solvay Specialty Polymers USA, LLC., Alpharetta, GA 30005 (US)
(72) Inventor: CUPTA, Glenn W., Roswell, Georgia 30075 (US); RYAN, Edward, Roswell, Georgia 30075 (US); STERN, Brian A., Duluth, Georgia 30097 (US)
(74) Representative: Jacques, Philippe
(86) International application number: PCT/EP2005/054939
(87) International publication number: WO 2006/037758

(56) References cited:
- EP-A- 0 132 094
- EP-A- 0 375 170

## Description

### FIELD OF THE INVENTION

The present invention relates to a polymer composition which exhibits usually an outstanding balance of tribological properties, processability, mechanical capabilities and chemical resistance, particularly useful for friction and wear application.

The present invention also relates to a shaped article comprising said polymer composition, and to the use of said shaped article as sliding part in friction and wear application.

The present invention finally relates to a method of manufacturing said shaped article.

### BACKGROUND OF THE INVENTION

New cost effective composite materials for friction and wear applications combining improved tribological (i.e. friction and wear of interacting surfaces in relative motion) and mechanical capabilities are sought for several industrial sectors (e.g. automotive, aircraft and aerospace, industrial equipments, appliance, marine motors etc.). The automotive industry, for instance, has developed several thermoplastic polymer composites which have replaced metal for the manufacturing of sliding parts of the engine or the car (e.g. distributor rotor arms, thrust washers and seats for power transmissions, shock absorber bearings, alternator covers, etc.). Research constantly strives to improve tribological performance by optimizing the formulations of existing composite materials and/or by replacing existing materials with entirely new polymer compositions. Due to the complexity of tribological phenomena, this type of research is still largely empirical.

A major problem in this area is the difficulty to design and get polymer components having an optimal combination of key properties. This is due to the fact that many of such properties are closely interdependent and some of them are even antagonistic. The term "antagonistic" is herein intended to denote those properties correlated in such a way that if one of them is improved, the other generally worsens. Attractive friction and wear polymer compositions should have for example : high melting or softening point; outstanding mechanical capabilities like stiffness (generally corresponding to high glass transition temperature), toughness, fatigue stress resistance (highly desirable for sliding parts subjected to heavy vibrations like automotive parts), high hardness, creep strength and fracture resistance; low thermal expansion coefficient; low wear rate and friction over a broad range of temperatures, sliding speeds, loads and in different types of environment (e.g. liquid or dry); constant tribological behavior on time (i.e. very long service life-time) especially under severe operating conditions; great chemical resistance towards a wide range of aggressive agents (e.g. hot water; steam; strong acids; strong bases; strong oxidizing agents; different liquids like for example hydrocarbons, mineral oils or other lubricants, organic solvents; detergents; hydraulic fluids; cooling fluids).

Another problem comes from the fact that viable polymer components, in spite of their very high melting or softening point, high glass transition temperature and great chemical stability should also be easily processable. Notably they should be processable by means of several different processing techniques, including for example : solution processing (e.g.casting), machinig, compression molding and/or melt processing. Preferably, such polymer components should be thermoplastic materials likely to be injection molded, blow molded, thermoformed and/or extruded. Melt processing techniques should be preferred because they are expected to hold out better manufacturing economics than solution processing, compression molding and machining. The rheology of such polymer components (and the corresponding polymer compositions), should make possible the manufacturing of sliding parts having complex geometries and matching a large set of different configurational requirements. In particular, optimal polymer components should have high melt stability (i.e. high critical shear), excellent dimensional stability (i.e. high deflection temperature) and low melt viscosity on a broad range of shear rates. This combination of properties should ensure cost effective moulding or extrusion of shaped articles holding tight dimensional tolerances, having smooth and glossy surface and being free from flow marks and any roughness (thus removing the need for individual machining and/or polishing). Of course, dimensional accuracy of the sliding part over a wide range of temperature is crucial to its efficient function.

Prior art polymer compositions for friction and wear applications generally comprise semi-crystalline and/or amorphous engineered polymers or mixtures thereof [e.g. polyetherketone (PEK), polyetheretherketone (PEEK), polytetrafluoro- ethylene (PTFE), polycarbonates (PC), liquid crystaline polyesters (LCP), acetal copolymers, aliphatic or aromatic polyamides, ultra high molecular weight polyethylene, polysulfone (PSF), polyethersulfone (PES), polyphenylsulfone (PPSF), polyetherethersulfone (PEES), polyamide-imides (PAI), polyimides (PI)]. These polymer components have some of the properties previously mentioned like, for example : high melting or softening temperature, high stiffness, high chemical stability and very good heat resistance. However, prior art polymer components only partially match the whole set of mechanical, physico-chemical, thermal, tribological and rheological properties previously set forth. For example, some of these prior art polymer components (like polytetrafluoroethylene, polyphenylenoxide, polyimides and liquid crystalline polyesters) have poor processability (due to very high melt or softening temperature and very high melt viscosity), poor melt stability and insufficient dimensional stability at high temperature. Some of them are vulnerable to specific chemical environments (like for instance thermoplastic polyimides which are attacked by strong aqueous acids and bases or polycarbonates which are particularly vulnerable to bases). Others are liable to craze or crack under strain or on aging (e.g. polycarbonates). Many prior art polymer compositions specifically designed for friction and wear applications also comprise one or more additives. Such additives are generally compounded into the polymer matrix in order to improve mechanical capabilities (e.g. stiffness or modulus), thermal and tribological behavior (e.g. improvement of thermal conductivity and heat resistance; reduction of wear rate or friction coefficient).

Additives may be used if the properties of the polymer components are not sufficient to meet severe friction and wear application requirements. However, previous art experience teaches that the effects resulting from the incorporation of one or more additives in a polymer matrix are not easily predictable (especially over a broad range of different operating conditions : temperatures, sliding speeds, pressures, additive loading) and that such effects are strongly depend on the nature of the polymer matrix (i.e. synergistic effect). The effects caused by the incorporation of an additive or a combination thereof may even be totally unexpected. For example, the addition of graphite powder to PAI results in polymer compositions whose specific friction coefficients markedly decrease with temperature, whereas the addition of the same additive to PEEK or PTFE results in polymer compositions whose friction coefficients are practically constant over a wide range of temperature. Sometimes, an additive expected to improve the tribological performance level of a polymer composition may have detrimental side effects. For instance, ceramic or metallic particulate fillers as well as glass fiber fillers, blended to relatively soft PTFE with the purpose to improve its wear resistance, in parallel increase dry sliding friction coefficient and abrade the counter-face.

The present invention addresses a major problem herein set forth, notably the difficulty to design and get a thermoplastic polymer composition having an optimal balance of tribological, mechanical, physico-chemical, thermal and rheological properties suitable for being used in friction and wear applications, especially in friction and wear applications under severe operating conditions. This difficulty comes from the fact that many of these properties, and in particular those properties which are strictly related to the polymer components, are closely interdependent and sometimes definitely antagonistic (e.g. high melting or softening point, high glass transition temperature and high heat deflection temperature versus melt processability and melt stability; stiffness versus toughness, creep strength and fracture resistance under strain; chemical resistance to a wide range of different aggressive compounds including acids, bases, organic liquids, steam, hot water and strong oxidizing agents). This difficulty also comes from the fact that the effects caused by the additives are not always predictable. Moreover, certain additives may cause undesired side effects on the tribological performance.

### SUMMARY OF THE INVENTION

The present invention relates to a polymer composition having surprisingly good balance of tribological, mechanical, physico-chemical, thermal and rheological properties.

The invented polymer composition comprises
(1) at least one poly(aryletherdisulfone) [polymer (P)] as defined below, and
(2) a combination (AC) of additives composed of
   - at least one fibrous filler (A1) as defined below, and
   - at least one non fibrous surface modifier (A2) as defined below.

The present invention is also directed to a shaped article comprising said polymer composition, wherein said shaped article is particularly useful for being used in friction and wear application, especially in friction and wear application under severe operating conditions.

The present invention is finally directed to a method of manufacturing said shaped article which comprises solution processing, compression molding, machining and/or melt processing said polymer composition.

### DETAILED DESCRIPTION OF THE INVENTION

The present invention relates to a polymer composition having surprisingly good balance of tribological, mechanical, physico-chemical, thermal and rheological properties particularly useful for friction and wear applications especially under severe operating conditions.

### Polymer (P)

The polymer composition according to the present invention comprises (1) at least one poly(aryletherdisulfone) [polymer (P)], wherein :
- more than 50 mole % of the recurring units of the polymer (P) are recurring units (R1): 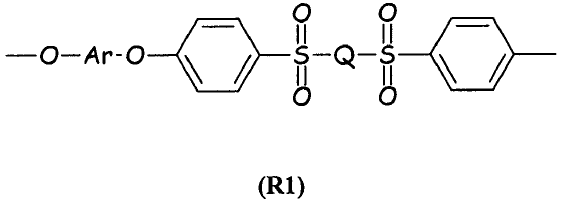
- Ar and Q, equal or different, are divalent radicals comprising at least one aromatic ring ;
- Q is a divalent radical chosen among the following structures : 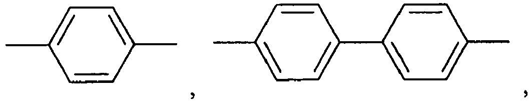 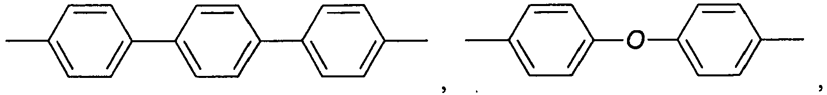 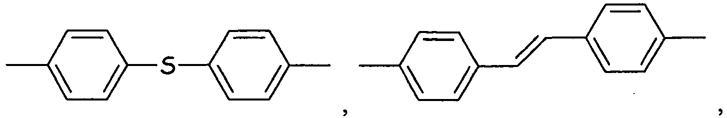 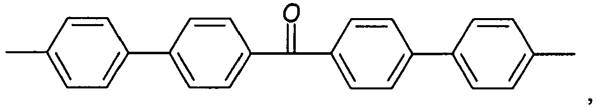 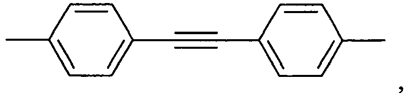 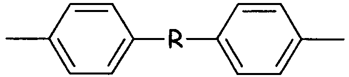 with R being : 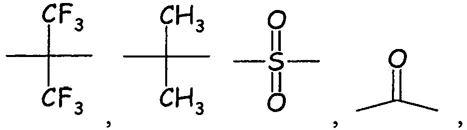 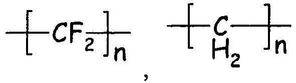 with n = integer from 1 to 6, or an aliphatic divalent group, linear or branched, of up to 6 carbon atoms and mixtures thereof.
- Ar is a divalent radical chosen among the following structures : 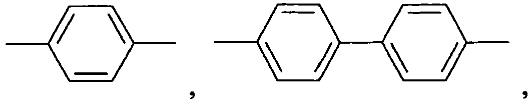 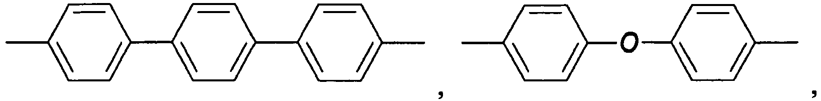 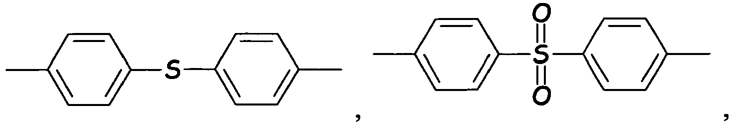 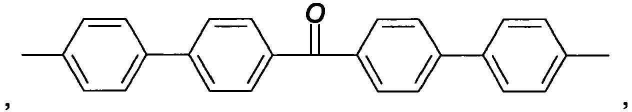 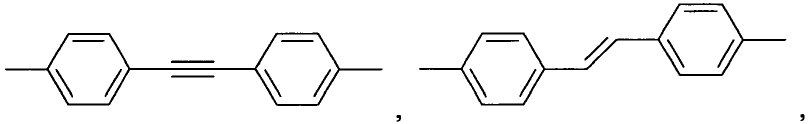 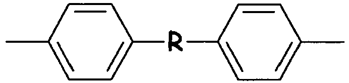 with R being : 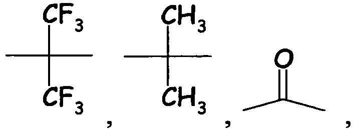 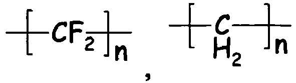
with n = integer from 1 to 6, or an aliphatic divalent group, linear or branched, of up to 6 carbon atoms and mixtures thereof.

More preferably, recurring units (R1) are chosen from: 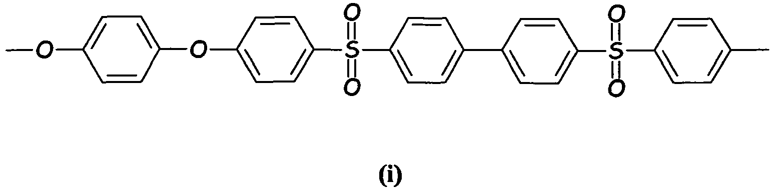 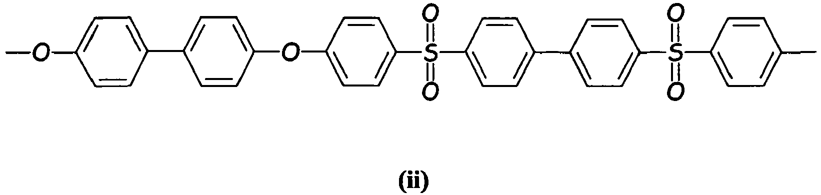 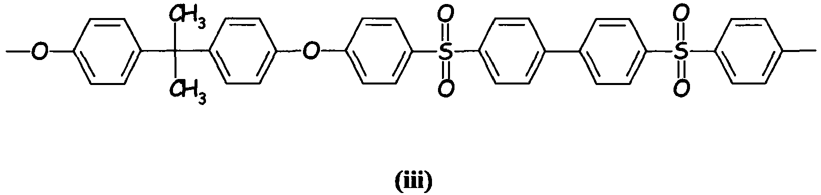 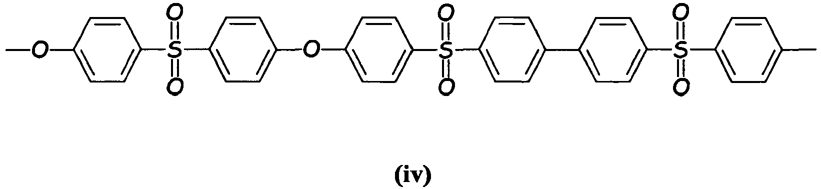 and mixtures thereof. More preferably, recurring units (R1) are recurring units :

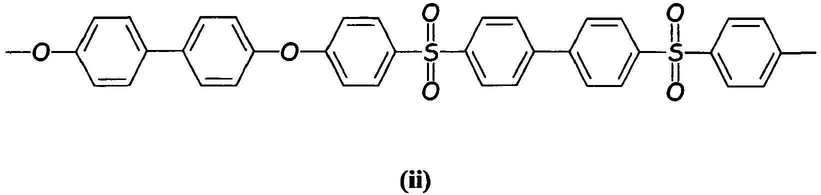

In a particular embodiment of the invention, polymer (P) further comprises recurring units (R2) : 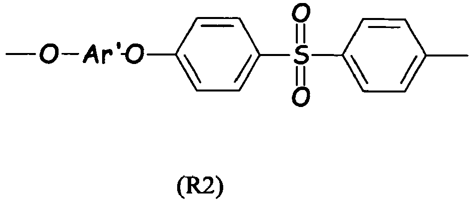 wherein Ar' is chosen among : 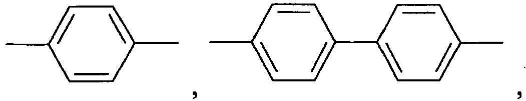 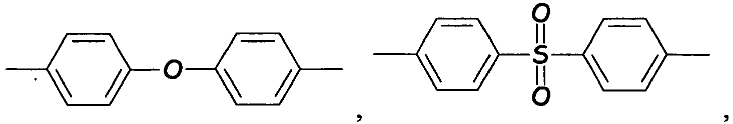 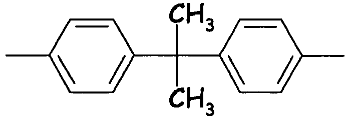 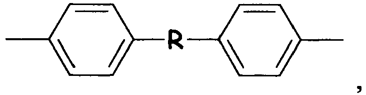 with R being an aliphatic divalent group of up to 6 carbon atoms, such as methylene, ethylene, isopropylene and the like. Recurring units (R2) are preferably chosen from : 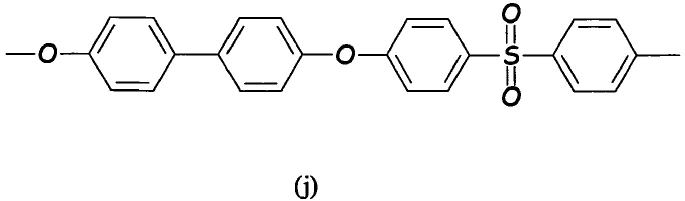 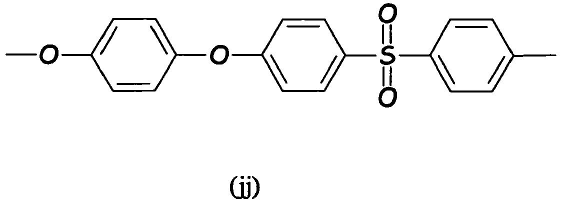 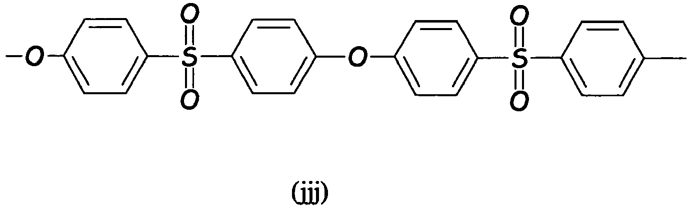 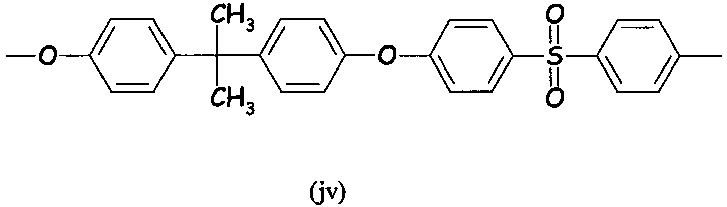 and mixtures thereof. In this embodiment, polymer (P) can be notably a random, alternating or block copolymer ; it is preferably a block copolymer.

Polymer (P) comprises preferably more than 70 wt. %, and more preferably more than 90 wt. % of recurring units (R1). Still more preferably, all the recurring units of polymer (P) are recurring units (R1). Excellent results are obtained when polymer (P) is a homopolymer the recurring units of which are recurring units (ii). Such polymer can be advantageously manufactured by polycondensation reaction between 4,4'-bis[(4-chlorophenylsulfonyl)-1,1'-biphenyl and biphenol.

Polymer (P) has a glass transition temperature advantageously of at least 240°C, preferably of at least 250°C and more preferably of at least 260°C. In addition, polymer (P) has a glass transition temperature advantageously of at most 275°C. The glass transition temperature of polymer (P) can be measured by any suitable technique known from the skilled in the art, in particular by Differential Scanning Calorimetry. For example, a Mettler DSC 30 calorimeter can be used. For this purpose, it is advantageously preliminarily checked that the calorimeter is well-calibrated by means of a calibration sample. Then, polymer (P) is submitted to the following cooling/heating cycle : 1^{st} heating from room temperature up to +320°C at a rate of 10°C/min, followed by cooling from +320°C down to room temperature at a rate of 20°C/min, followed by 2^{nd} heating from room temperature up to +320°C at a rate of 10°C/min. The glass transition temperature is measured during 2^{nd} heating. The glass transition temperature is advantageously determined by a construction procedure on the heat flow curve : a first tangent line to the curve above the transition region is constructed ; a second tangent line to the curve below the transition region is also constructed ; the temperature on the curve halfway between the two tangent lines, or ½ delta Cp, is the glass transition temperature.

In spite of its very high glass transition temperature, polymer (P) has generally excellent processability in the melt (favorable rheology and high melt stability). In particular, polymer (P) may be injection or blow molded, extruded and thermoformed. Polymer (P) may also be processed by means of other processing techniques including for example solution processing, compression molding and machining.

Advantageously, polymer (P) has very high dimensional stability. In this regard, polymer (P) has a heat deflection temperature, measured under a load of 1.82 MPa (264 psi) according to ASTM D-648, advantageously of at least 230°C, preferably of at least 240°C and more preferably of at least 250°C. In addition, polymer (P) has a heat deflection temperature advantageously of at most 265 °C.

In addition, polymer (P) has generally the following benefitial properties : excellent mechanical capabilities notably high stiffness, hardness, toughness, outstanding creep strength and fracture resistance; excellent dielectric properties over a wide range of temperature; outstanding chemical resistance to a wide range of different aggressive environments (e.g. hot water, steam, strong acids, strong bases, strong oxidizing agents, hydrocarbons, detergents, cooling fluids, hydraulic fluids, mineral oils/grease and other lubricants, organic solvents); inherent flammability resistance; excellent sliding properties and remarkable wear resistance.

Advantageously, polymer (P) is amorphous or semi-crystalline. Preferably, polymer (P) is amorphous.

The weight amount of polymer (P) with respect to the total weight of the polymer composition is advantageously of at least 5 wt. %, preferably of at least 15 wt. %, more preferably of at least 20 wt. % and still more preferably of at least 45 wt. %. Besides, the weight amount of polymer (P) with respect to the total weight of the polymer composition is advantageously of at most 95 wt. %, preferably of at most 90 wt. % and more preferably of at most 85 wt. %.

### Combination (AC) of additives.

The polymer composition according to the present invention, also comprises a combination (AC) of additives, composed of :
- at least one fibrous filler (A1) as defined below, and
- at least one non fibrous surface modifier (A2) as defined below.

The term "filler" is herein intended to denote reinforcement fillers. The term "surface modifier" is herein intended to denote an additive likely to modify, for example to improve, the surface properties, in particular, the surface frictional properties (e.g. lubricant). The term "particulate solid" is herein intended to denote a solid having a non fibrous morphology (e.g. sphere, flake, rod, pellet, coarse powder, micro-powder, etc.) or a particulate solid that is obtained by comminuting (i.e. reducing to very smal particles by, for example, milling, grinding, pounding or abrading) a fibrous material.

Fibrous filler (A1) is chosen from the group composed of glass fibers, asbestos fibers, poly(benzothiazole) fibers, poly(benzimidazole) fibers, poly(benzoxazole) fibers, polyarylether fibers, aramide fibers, carbon fibers, boron fibers (e.g. obtained by deposition of boron microgranules on a tungsten or carbonate yarn), metal fibers, ceramic fibers like silicon nitride Si₃N₄, talc-glass fibers, calcium silicate fibers like wollastonite micro-fibers, silicon carbide fibers, metal borides fibers (e.g. TiB₂).

Carbon fibers useful for the present invention can advantageously be obtained by heat treatment and pyrolysis of different polymeric precursors such as, for example, rayon, polyacrylonitrile (PAN), aromatic polyamide or phenolic resin ; carbon fibers useful for the present invention may also be obtained from pitchy materials. The term "graphite fiber" intends to denote carbon fibers obtained by high temperature pyrolysis (over 2000°C) of carbon fibers, wherein the carbon atoms place in a way similar to the graphite structure. Carbon fibers useful for the present invention are preferably chosen from the group composed of PAN based carbon fibers, pitch based carbon fibers, graphite fibers, and mixtures thereof.

Fibrous filler (A1) can be particularly useful to improve certain properties of the invented polymer composition, notably : short term mechanical capabilities (i.e. mechanical strength, toughness, hardness, stiffness), thermal conductivity, creep strength and fracture resistance, high temperature dimensional stability, fatigue resistance. Depending on its nature and its weight amount in the polymer composition, fibrous filler (A1) can also help to improve wear resistance, frictional behaviour and PV limit. "PV limit" is intended to denote the product of limiting bearing pressure and peripheral velocity in a given dynamic system of well defined geometry. When PV limit is exceeded, the polymer composition (and, the case being, the sliding part made thereof) may undergo one or more of the following phenomena : melting, cold flow or creep, unstable friction.

Advantageoulsy, fibrous filler (A1) is treated with coupling agents and the like to improve adhesion between the polymer matrix and the filler particles.

The weight amount of fibrous filler (A1) is advantageously an amount that does not increase the friction coefficient of the polymer composition and/or detrimentally affect surface finish of the shaped article made thereof. The weight amount of fibrous filler (A1) with respect to the total weight of the polymer composition is preferably of at least 1 wt. %, more preferably of at least 10 wt. % and still more preferably of at least 25 wt. %. In addition, the weight amount of fibrous filler (A1) with respect to the total weight of the polymer composition is preferably of at most 70 wt. %, more preferably of at most 50 wt. % and still more preferably of at most 40 wt. %.

Non fibrous surface modifier (A2) is chosen from liquid surface modifiers and particulate solid surface modifiers. Said liquid surface modifiers and particulate solid surface modifiers are themselves selected from the group composed of mineral oils, polyvinyl acetate, polyvinyl alcohol, stearic acid, stearates (e.g. magnesium stearate), wax emulsions, solid waxes, graphite, sheet silicate like mica, talc, kaolin, silica, metal sulfides like molybdenum disulfide, silicon oils, particulate polyimides, ethylene based polymers (e.g. ultra high molecular weight polyethylene), ceramic powder lubricants like hexagonal boron nitride, metal oxides (e.g. SnO, ZnO, PbO, MoO₃, TiO₂, Al₂O₃ and the like), carbides [e.g. tungsten carbide, titanium carbide (TiC), chromium carbide (Cr₂₃C₆, Cr₇C₃, Cr₃C₂), boron carbide, silicon carbide (SiC) and the like], titanates (e.g. barium titanate, potassium titanate), metal halides (e.g. CaF₂), silicon nitride Si₃N₄ , titanium boride (TiB₂) and metal sulfates (e.g. BaSO₄).

Non fibrous surface modifier (A2) is advantageously used to modify certain surface properties of the invented polymer composition, notably, to reduce static and dynamic friction coefficient, to avoid mating surface wear and to limit friction/erosion eventually resulting from the utilization of relatively large amounts of fibrous filler (A1). Often, when non fibrous surface modifier (A2) is a lubricant, the rigidity of polymer (P) is surprisingly little affected.

Advantageoulsy, non fibrous surface modifier (A2) is treated with coupling agents and the like to improve adhesion between the polymer matrix and (A2).

The weight amount of non fibrous surface modifier (A2) with respect to the total weight of the polymer composition is advantageously of at least 1 wt. %, preferably of at least 5 wt. % and more preferably of at least 10 wt. %. In addition, the weight amount of surface modifier (A2) with respect to the total weight of the polymer composition is advantageously of at most 70 wt. %, preferably of at most 60 wt. % and more preferably of at most 55 wt. %.

The fibrous filler (A1) over non fibrous surface modifier (A2) weight ratio [(A1)/(A2) weight ratio] is advantageously of at least 0.1 and, preferably, of at least 0.3. In addition, (A1)/(A2) weight ratio is advantageously of at most 10 and, preferably, of at most 3.

The weight amount of combination (AC) is the sum of the weight amount of fibrous filler (A1) and of non fibrous surface modifier (A2). It is hereafter referred to as «(A1)+(A2) weight amount». Then, (A1)+(A2) weight amount, with respect to the total weight of the polymer composition, is advantageously of at least 2 wt. %, preferably, of at least 15 wt. % and more preferably of at least 35 wt. %. In addition, (A1)+(A2) weight amount with respect to the total weight of the polymer composition, is advantageously of at most 70 wt. %.

Optionally, the polymer composition according to the present invention may further comprise notably at least one additional polymer [polymer (P')] and/or at least one additional additive (ADA).

Polymer (P') is intended to denote any polymer other than those possibly comprised in combination (AC). Polymer (P') can be compatible with polymer (P) or not. The term "compatible" means that polymer (P') can be melt kneaded with polymer (P) in order to obtain a homogeneous blend. Preferably, polymer (P') is compatible with polymer (P). Optionally, polymer (P') is functionalized by means of polar functional groups ; for example, it can be carboxyl-modified by grafting ethylenically unsaturated monomers bearing carboxyl groups, their esters or their anhydrides. Polymer (P') is preferably chosen from the group composed of polyetherimides (PEI), polyamide-imides (PAI), polyaryletherketones like polyetheretherketone (PEEK), partially halogenated polymers [e.g. polyvinylidenefluoride (PVDF), polyvinyl chloride (PVC), polyvinylidenechloride (PVDC) and the like], polytrichlorofluoroethylene (PCTFE), aliphatic polyamides, aromatic polyamides [e.g. polyphthalamides (PPA), poly(m-xylylene adipamide) commonly referred to as MXD6], polyesters (e.g. polybutyleneterephthalate (PBT), polyethyleneterephthalate (PET)], polybenzimidazole (PBI), polycarbonates (PC), polyphenylenesulfide (PPS), urethane thermoplastic elastomers, styrenic thermoplastic elastomers (e.g. styrene/ ethylene/ butylene/ styrene block copolymers (SEBS)], olefin thermoplastic elastomers [e.g.ethylene/ propylene/ diene terpolymers (EPDM), preferably their maleated versions (EPDM-g-MA)], polyurethanes (PU), polysulfones (PSF), polyethersulfones (PES), polyphenylsulfones (PPSF), polyetherethersulfones (PEES), liquid crystalline polymers (LCP), and mixtures thereof. More preferably, polymer (P') is chosen from the group composed of PEI, PC, PEEK, aromatic polyamides, LCP, PPS, PSF, PES, PPSF, PEES, and mixtures thereof. Still more preferably, polymer (P') is chosen from the group composed of PPSF, PSF and PES. The more preferably, polymer (P') is a PPSF.
For clarity, the structural repeat units of PPSF, PSF, PES and PEES are listed below: 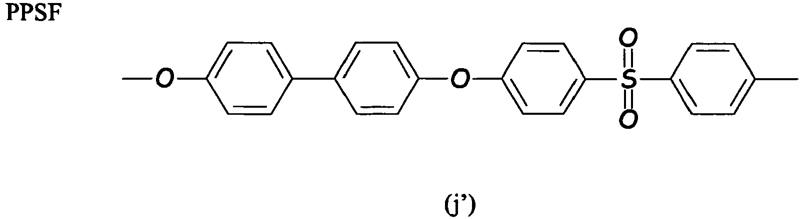 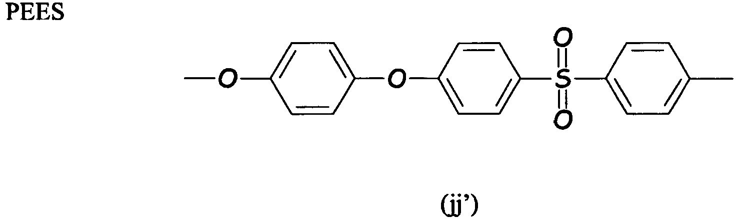 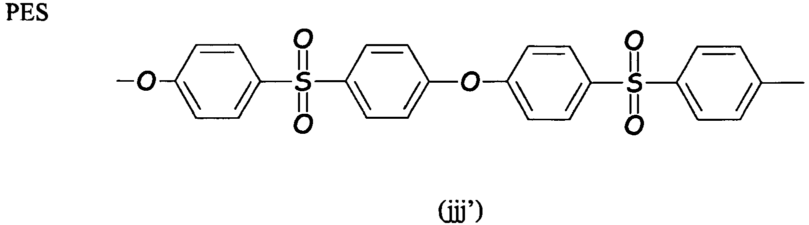 and/or
mixtures of (jj') and (jjj')

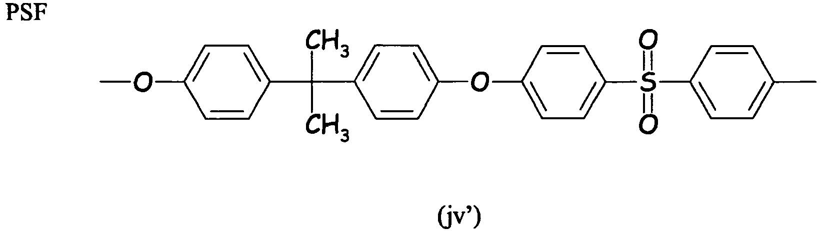

PPSF, PSF and PES are available from Solvay Advanced Polymers, L.L.C. respectively as RADEL^{®} R, UDEL^{®} and RADEL^{®} A polymers.

In a certain embodiment, it is preferred that the invented polymer composition be free of polymer (P').

In a certain other embodiment, it is preferred that the invented polymer composition further comprises polymer (P'). The case being :
- the weight amount of polymer (P') with respect to the total weight of the polymer composition is preferably of at least 1 wt. % and, more preferably, of at least 10 wt. % ; in addition, the weight amount of polymer (P') with respect to the total weight of the polymer composition is preferably of at most 70 wt. % and more preferably of at most 60 wt. % ;
- the polymer (P) over polymer (P') weight ratio [(P)/(P') weight ratio] is preferably of at least 0.3 and more preferably of at least 1.0 ; in addition, (P)/(P') weight ratio is preferably of at most 100 and more preferably of at most 10 ;
- the sum of the weight amount of polymer (P) and of the weight amount of polymer (P') [(P)+(P') weight amount] with respect to the total weight of the polymer composition is preferably of at least 6 wt. % and more preferably of at least 25 wt. % ; besides, (P)+(P') weight amount with respect to the total weight of the polymer composition is preferably of at most 95 wt. %.

(ADA) is an additive other than fibrous filler (A1), non fibrous surface modifier (A2) and polymer (P'). (ADA) is advantageously chosen from the group composed of antioxidants [possibly useful antioxidants include phenols, phosphites, phosphonites, thiosynergists, hindered amine stabilizers, hydroxyl amines, benzofuranone derivatives, acryloyl modified phenols, etc.], antistatic additives such as carbon powders, carbon nanotubes, particulate reinforcement fillers (e.g. chalk and the like), nucleating agents (e.g. titanium dioxide), potassium titanate, pigments, dyes, flame retardants, mold release agents, light stabilizers, heat stabilizers like for example copper-containing stabilizers comprising a copper compound soluble in the polymer matrix and an alkali metal halide, thermal management fillers (other than carbon fiber like for example aluminum nitride, alumina, silicon carbide), and mixtures thereof. Nature and loading of (ADA) can be determined for the particular use envisioned by one of ordinary skill in the art in view of this disclosure.

The components of the invented polymer composition, in particular polymer (P), combination (AC), optional polymer (P') and optional additive (ADA), may be blended and kneaded. For example, all the components of the polymer composition may be first blended and subsequently co-extruded. Alternatively, the components may be fed separately into the extruder eventually using different feeding zones. If needed, only some of them may be preliminary blended and subsequently fed into the extruder. For example, the polymer components [polymer (P) + polymer (P')] may be blended and subsequently fed into the extruder for kneading whereas the additives (together or separately) may be fed downstream.

The polymer composition according to the present invention has usually an outstanding balance of tribological performances, processability, mechanical capabilities and chemical resistance. In spite of its extremely high glass transition temperature and softening point, the invented polymer composition may exhibit very good melt processability, notably, very good moldability. In addition, in spite of its excellent stiffness, the invented polymer composition may also be remarkably tough and may have outstanding creep strength and fracture resistance under strain and/or on aging. Generally, the invented polymer composition is highly stable towards several potentially aggressive agents having different chemical structure and reactivity, notably : lubricant oils and grease, detergents, cooling and hydraulic fluids, hot water and steam, strong acids, strong bases, strong oxidizing agents. The invented polymer composition advantageously has outstanding dimensional stability (very high heat deflection temperature); excellent heat resistance; excellent tribological performance levels (i.e. excellent sliding properties and wear resistance).

Since the invented polymer composition has usually a good rheological behavior and remarkable dimensional stability, it is generally suitable for being cost effectively molded into a variety of articles having high dimensional accuracy and matching different configurational requirements. Since the polymer composition exhibits also usually improved melt stability, melt processing operations are easier, ensuring the manufacture of molded articles having smooth and glossy surface, free from flow marks and any roughness thus limiting the need for individual machining and/or polishing.

Precisely, another aspect of the invention is a performing shaped article.

With this end in view, the present invention concerns a shaped article comprising the polymer composition as above described.

Advantageously, the invented shaped article is used as sliding part, in particular as sliding part in a friction and wear application.

The shaped article according to the present invention is preferably chosen from bearings including metal-polymer bearings, anti-friction bearing cages, thrust washers, brush washers, bushings, seal rings, slides, cable carriers, ball bearing balls, cam followers and gears.

The weight amount of the polymer composition comprised in the shaped article with respect to the total weight of the shaped article is advantageously of at least 10 wt. %, preferably of at least 50 wt. %, more preferably of at least 80 wt. %. Still more preferably, the shaped article is essentially composed of the invented polymer composition.

Generally, the shaped article has an outstanding balance of tribological and mechanical properties, remarkable dimensional stability, chemical resistance, excellent surface finish (e.g. glossy smooth surface) and tight dimensional accuracy. Due to the above mentioned properties, the shaped article according to the present invention is usually particularly indicated for withstanding severe operating conditions in the frame of long term friction and wear applications (e.g. very low or very high service temperature, aggressive chemical environments, dry or liquid environments; high speeds; low speeds; high loads; very long service-time; elevated PV; etc.).

A last aspect of the present invention is a performing method of manufacturing a shaped article.

With this end in view, the present invention concerns a method of manucturing the shaped article as above described, which comprises solution processing, compression molding, machining and/or melt processing the polymer composition as above described.

Melt processing is preferred. Melt processing includes notably extruding, co-extruding, injection molding, blow molding, casting, and/or thermoforming.

## Claims

1. Polymer composition comprising
(1) at least one poly(aryletherdisulfone) [polymer (P)], and
(2) a combination (AC) of additives composed of
- at least one fibrous filler (A1) selected from the group composed of glass fibers, asbestos fibers, poly(benzothiazole) fibers, poly(benzimidazole) fibers, poly(benzoxazole) fibers, polyarylether fibers, aramide fibers, carbon fibers, boron fibers, metal fibers, ceramic fibers, talc-glass fibers, calcium silicate fibers, silicon carbide fibers, metal borides fibers, and
- at least one non fibrous surface modifier (A2) chosen from liquid surface modifiers and particulate surface modifiers, said liquid surface modifiers and particulate surface modifiers being themselves selected from the group consisting of mineral oils, polyvinyl acetate, polyvinyl alcohol, stearic acid, stearates, wax emulsions, solid waxes, graphite, sheet silicate, talc, kaolin, silica, metal sulfides, silicon oils, particulate polyimides, ethylene based polymers, ceramic powder lubricants, metal oxides, carbides, titanates, metal halides, silicon nitride, titanium boride and metal sulfates,
wherein :
- more than 50 mole % of the recurring units of the polymer (P) are recurring units (R1) : 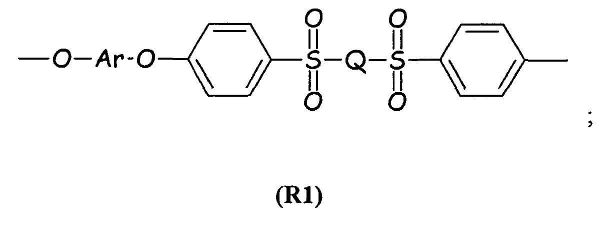
- **Ar** and **Q**, equal or different, are divalent radicals comprising at least one aromatic ring ;
- Q is a divalent radical chosen among the following structures : 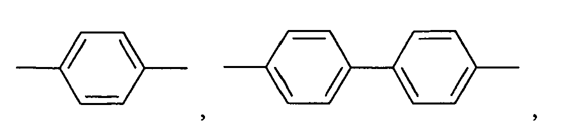 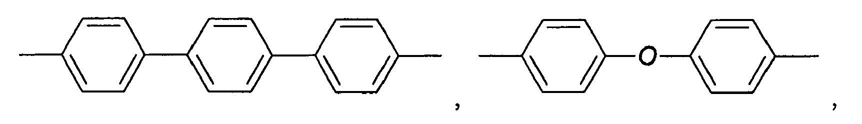 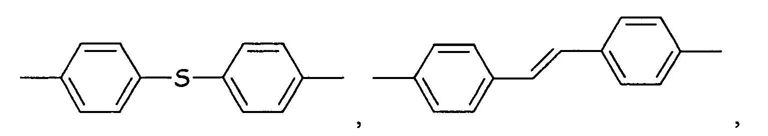 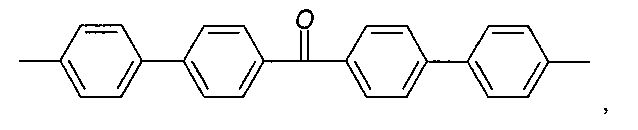 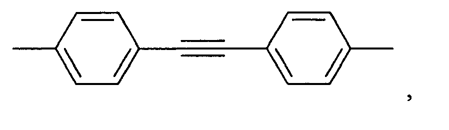 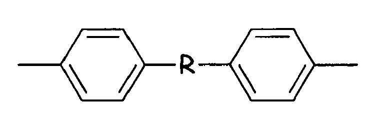
with R being : 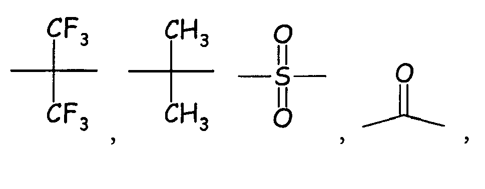 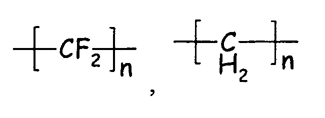 with n = integer from 1 to 6, or an aliphatic divalent group, linear or branched, of up to 6 carbon atoms and mixtures thereof ;
- Ar is a divalent radical chosen among the following structures : 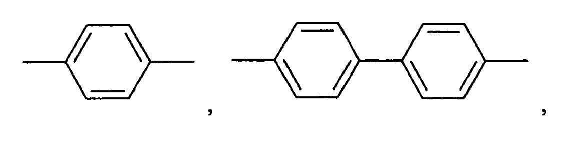 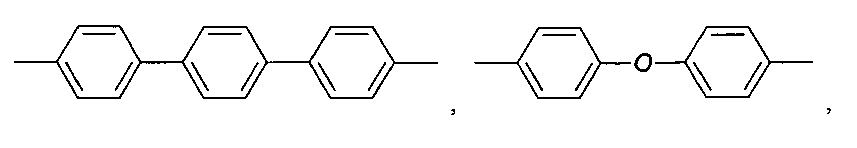 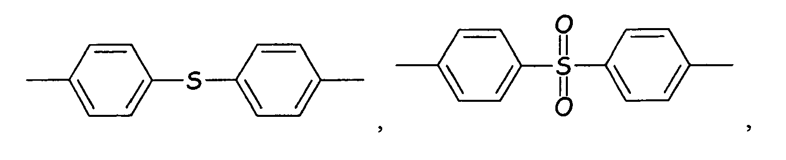 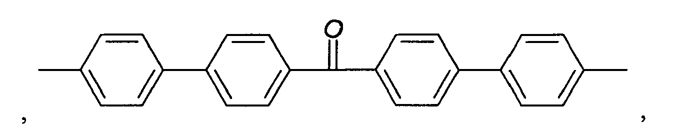 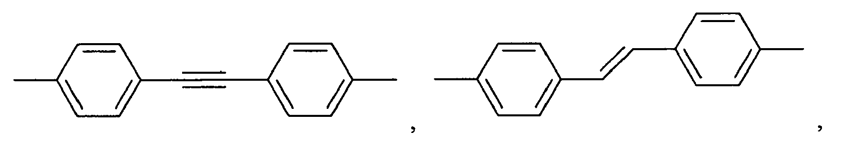 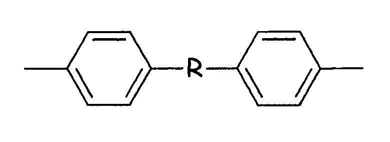
with R being : 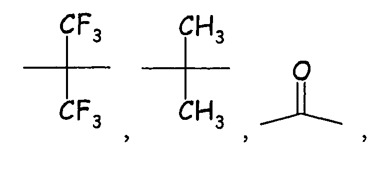 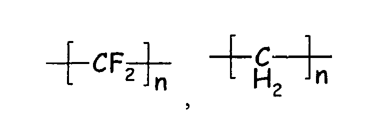 with n = integer from 1 to 6, or an aliphatic divalent group, linear or branched, of up to 6 carbon atoms and mixtures thereof.

2. Polymer composition according to claim 1, **characterized in that** fibrous filler (A1) is chosen from the group composed of carbon fibers, glass fibers, poly(benzothiazole) fibers, poly(benzimidazole) fibers, poly(benzoxazole) fibers, polyarylether fibers and aramide fibers.

3. Polymer composition according to claim 1 or 2, **characterized in that** non fibrous surface modifier (A2) is chosen from the group composed of silicone oils, graphite and hexagonal boron nitride.

4. Polymer composition according to anyone of claims 1 to 3, **characterized in that** recurring units (R1) are chosen from : 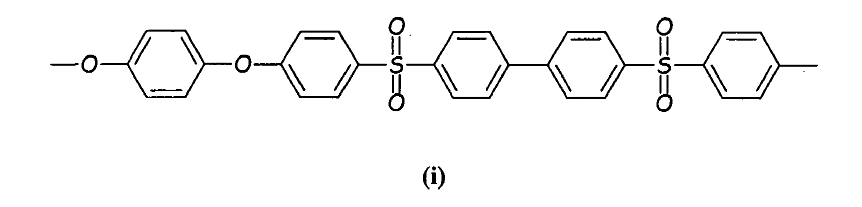 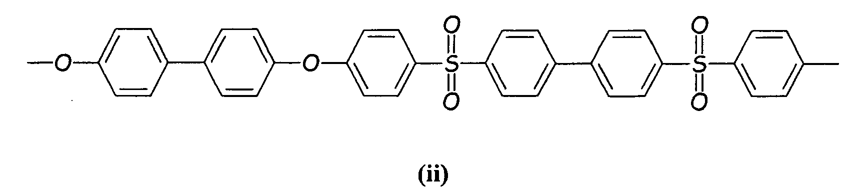 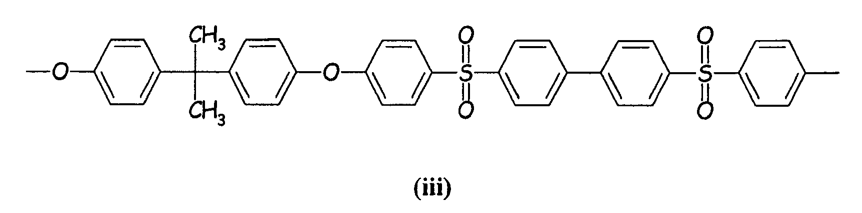 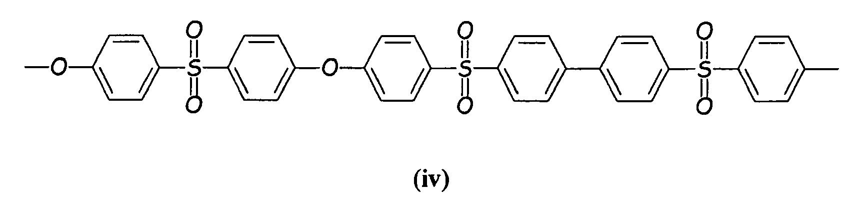 and mixtures thereof.

5. Polymer composition according to anyone of claims 1 to 4, **characterized in that** all the recurring units of polymer (P) are recurring units (R1).

6. Polymer composition according to anyone of claims 1 to 5, **characterized in that** recurring units (R1) are :

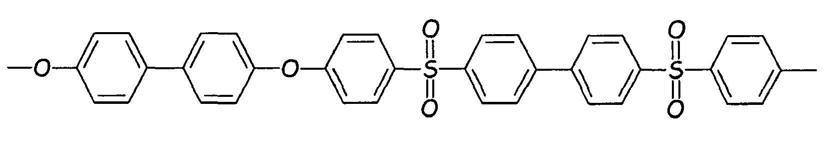

7. Polymer composition according to anyone of claims 1 to 6, **characterized in that** polymer (P) has a glass transition temperature of at least 240°C, measured by Differential Scanning Calorimetry, wherein :
- polymer (P) is submitted to the following cooling/heating cycle : first heating from room temperature up to +320°C at a rate of 10°C/min, followed by cooling from +320°C down to room temperature at a rate of 20°C/min, followed by second heating from room temperature up to +320°C at a rate of 10°C/min ;
- the glass transition temperature is measured during second heating, and determined by a construction procedure on the heat flow curve : a first tangent line to the curve above the transition region is constructed ; a second tangent line to the curve below the transition region is also constructed ; the temperature on the curve halfway between the two tangent lines is the glass transition temperature.

8. Polymer composition according to anyone of claims 1 to 7, **characterized in that** polymer (P) has a heat deflection temperature of at least 230°C, measured under a load of 1.82 MPa (264 psi) according to ASTM D-648.

9. Polymer composition according to anyone of claims 1 to 8, **characterized in that** the weight amount of polymer (P) with respect to the total weight of the polymer composition is of at least 5 wt. % and of at most 95 wt. %.

10. Polymer composition according to claim 9, **characterized in that** the weight amount of polymer (P) with respect to the total weight of the polymer composition is of at least 45 wt. % and of at most 85 wt. %.

11. Polymer composition according to anyone of claims 1 to 10, **characterized in that** the fibrous filler (A1) over non fibrous surface modifier (A2) weight ratio [(A1)/(A2) weight ratio] is of at least 0.1 and of at most 10.

12. Polymer composition according to claim 11, **characterized in that** the fibrous filler (A1) over non fibrous surface modifier (A2) weight ratio [(A1)/(A2) weight ratio] is of at least 0.3.

13. Polymer composition according to claim 11, **characterized in that** the fibrous filler (A1) over non fibrous surface modifier (A2) weight ratio [(A1)/(A2) weight ratio] is of at most 3.

14. Polymer composition according to claim 11, **characterized in that** the fibrous filler (A1) over non fibrous surface modifier (A2) weight ratio [(A1)/(A2) weight ratio] is of at least 0.3 and of at most 3.

15. Polymer composition according to anyone of claims 1 to 14, **characterized in that** the weight amount of combination (AC) [(A1)+(A2) weight amount], with respect to the total weight of the polymer composition, is of at least 2 wt. % and of at most 70 wt. %.

16. Polymer composition according to claim 15, **characterized in that** the weight amount of combination (AC) [(A1)+(A2) weight amount], with respect to the total weight of the polymer composition, is of at least 35 wt. %.

17. Polymer composition according to anyone of claims 1 to 16, **characterized in that** it is free of any polymer (P') other than the polymer (P) and the polymers possibly comprised in combination (AC).

18. Shaped article comprising the polymer composition according to anyone of claims 1 to 17, **characterized in that** the weight amount of the polymer composition with respect of the total weight of the shaped article is of at least 10 wt. %.

19. Shaped article according to claim 18, which is a sliding part suitable for being used in a friction and wear application.

20. Shaped article according to claim 19, which is chosen from bearings, anti-friction bearing cages, thrust washers, brush washers, bushings, seal rings, slides, cable carriers, ball bearing balls, cam followers and gears.

21. Method of manufacturing the shaped article according to anyone of claims 18 to 20, which comprises solution processing, compression molding, machining and/or melt processing the polymer composition.

## Patentansprüche

1. Polymerzusammensetzung, umfassend
(1) mindestens ein Poly(aryletherdisulfon) [Polymer (P)] und
(2) eine Kombination (AC) von Additiven, bestehend aus
- mindestens einem faserförmigen Füllstoff (A1), ausgewählt aus der Gruppe bestehend aus Glasfasern, Asbestfasern, Poly(benzothiazol)fasern, Poly(benzimidazol)fasern, Poly(benzoxazol)fasern, Polyaryletherfasern, Aramidfasern, Kohlefasern, Borfasern, Metallfasern, Keramikfasern, Talk-Glasfasern, Calciumsilicatfasern, Siliciumcarbidfasern, Metallboridfasern, und
- mindestens einem nicht faserförmigen Oberflächenmodifizierungsmittel (A2), ausgewählt aus flüssigen Oberflächenmodifizierungsmitteln und teilchenförmigen Oberflächenmodifizierungsmitteln, wobei die flüssigen Oberflächenmodifizierungsmittel und teilchenförmigen Oberflächenmodifizierungsmittel selbst aus der Gruppe bestehend aus Mineralölen, Polyvinylacetat, Polyvinylalkohol, Stearinsäure, Stearaten, Wachsemulsionen, festen Wachsen, Graphit, Schichtsilicat, Talk, Kaolin, Siliciumdioxid, Metallsulfiden, Silikonölen, teilchenförmigen Polyimiden, auf Ethylen basierenden Polymeren, Keramikpulver-Gleitmitteln, Metalloxiden, Carbiden, Titanaten, Metallhalogeniden, Siliciumnitrid, Titanborid und Metallsulfaten ausgewählt sind,
wobei :
- es sich bei mehr als 50 Mol- % der Wiederholungseinheiten des Polymers (P) um Wiederholungseinheiten (R1) handelt : 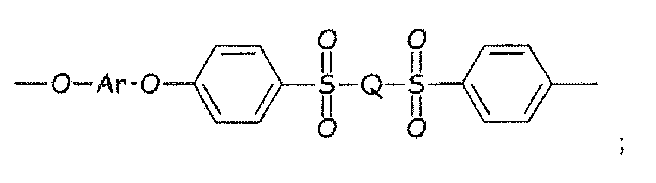 (R1)
- Ar und Q gleich oder verschieden sind und für zweiwertige Reste, die mindestens einen aromatischen Ring umfassen, stehen;
- Q für einen zweiwertigen Rest steht, der unter den folgenden Strukturen
ausgewählt ist : 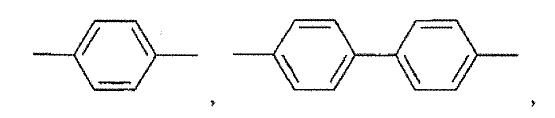 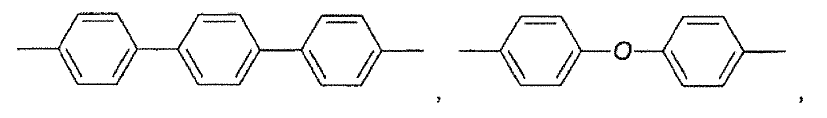 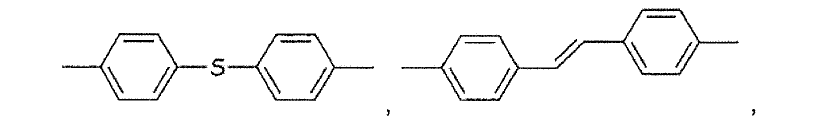 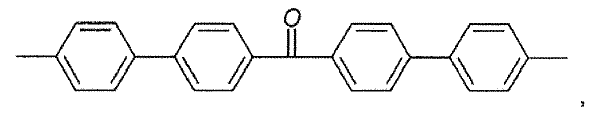 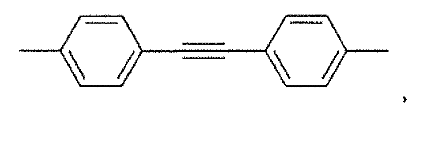 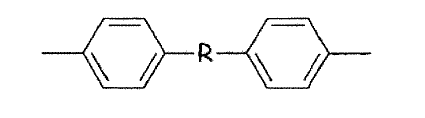
wobei R für: 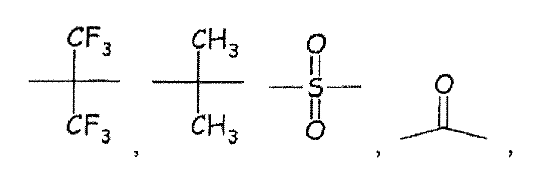 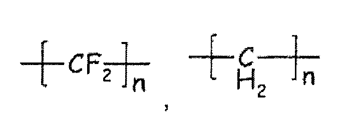 mit n = ganze Zahl von 1 bis 6 oder eine lineare oder verzweigte aliphatische zweiwertige Gruppe mit bis zu 6 Kohlenstoffatomen und Mischungen davon steht;
- Ar für einen zweiwertigen Rest steht, der unter den folgenden Strukturen
ausgewählt ist : 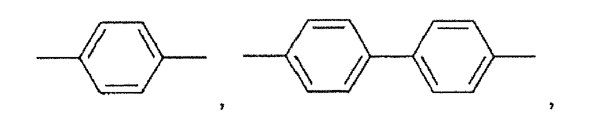 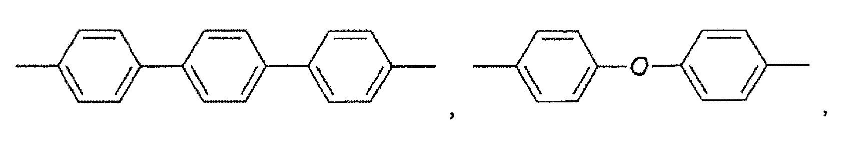 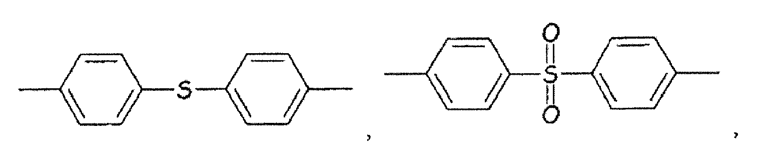 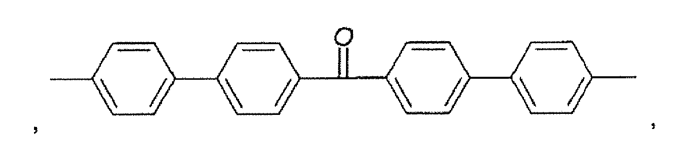 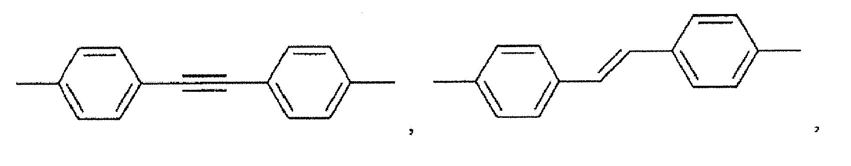 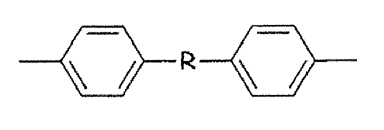
wobei R für: 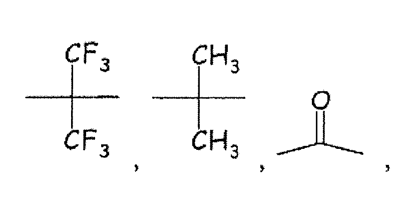 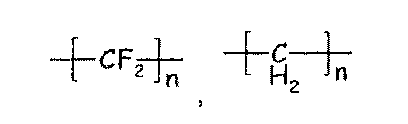 mit n = ganze Zahl von 1 bis 6 oder eine lineare oder verzweigte aliphatische zweiwertige Gruppe mit bis zu 6 Kohlenstoffatomen und Mischungen davon steht.

2. Polymerzusammensetzung nach Anspruch 1, **dadurch gekennzeichnet, dass** der faserförmige Füllstoff (A1) aus der Gruppe bestehend aus Kohlefasern, Glasfasern, Poly(benzothiazol)fasern, Poly(benzimidazol)fasern, Poly(benzoxazol)fasern, Polyaryletherfasern und Aramidfasern ausgewählt ist.

3. Polymerzusammensetzung nach Anspruch 1 oder 2, **dadurch gekennzeichnet, dass** das nicht faserförmige Oberflächenmodifizierungsmittel (A2) aus der Gruppe bestehend aus Silikonölen, Graphit und hexagonalem Bornitrid ausgewählt ist.

4. Polymerzusammensetzung nach einem der Ansprüche 1 bis 3, **dadurch gekennzeichnet, dass** Wiederholungseinheiten (R1) aus 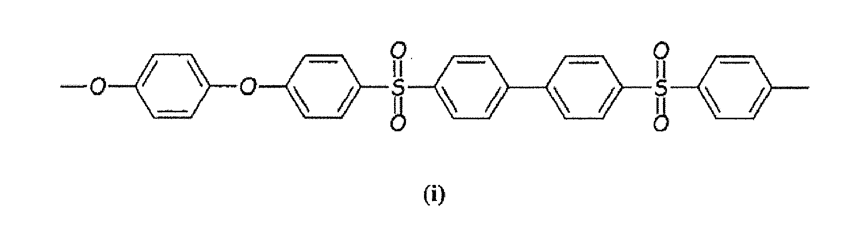 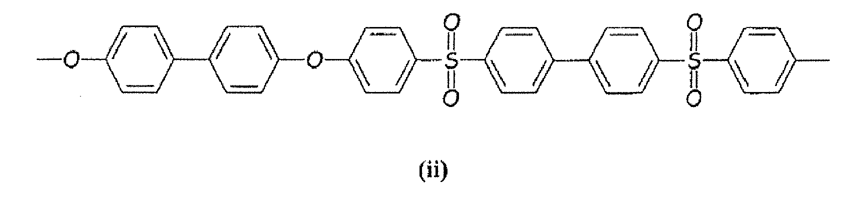 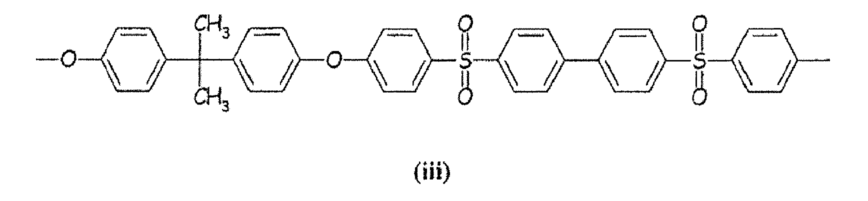 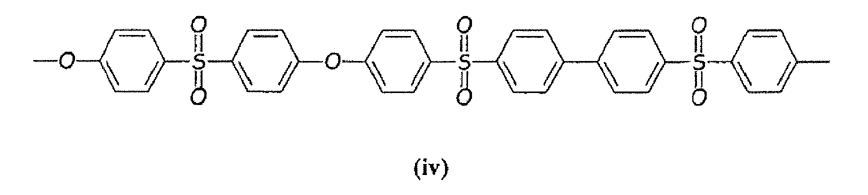 und Mischungen davon ausgewählt sind.

5. Polymerzusammensetzung nach einem der Ansprüche 1 bis 4, **dadurch gekennzeichnet, dass** es sich bei allen Wiederholungseinheiten von Polymer (P) um Wiederholungseinheiten (R1) handelt.

6. Polymerzusammensetzung nach einem der Ansprüche 1 bis 5, **dadurch gekennzeichnet, dass** es sich bei den Wiederholungseinheiten (R1) um 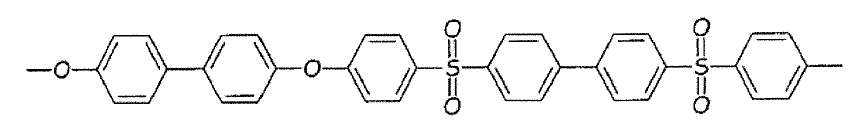 handelt.

7. Polymerzusammensetzung nach einem der Ansprüche 1 bis 6, **dadurch gekennzeichnet, dass** das Polymer (P) eine Glasübergangstemperatur von mindestens 240°C, gemessen durch Differentialkalorimetrie, aufweist, wobei :
- Polymer (P) dem folgenden Abkühl-/Aufheiz-Zyklus unterworfen wird: erstes Aufheizen von Raumtemperatur auf +320°C mit einer Rate von 10°C/min, gefolgt von Abkühlen von +320°C auf Raumtemperatur mit einer Rate von 20°C/min, gefolgt von zweitem Aufheizen von Raumtemperatur auf +320°C mit einer Rate von 10°C/min;
- die Glasübergangstemperatur beim zweiten Aufheizen gemessen wird und durch eine Konstruktionsmethode an der Wärmestromkurve bestimmt wird:
es wird eine erste Tangentenlinie zu der Kurve oberhalb des Übergangsbereichs konstruiert; es wird auch eine zweite Tangentenlinie zu der Kurve unterhalb des Übergangsbereichs konstruiert; die Temperatur auf der Kurve auf halbem Wege zwischen den beiden Tangenten ist die Glasübergangstemperatur.

8. Polymerzusammensetzung nach einem der Ansprüche 1 bis 7, **dadurch gekennzeichnet, dass** das Polymer (P) eine Formbeständigkeitstemperatur von mindestens 230°C, gemessen unter einer Last von 1,82 MPa (264 psi) gemäß ASTM D-648, aufweist.

9. Polymerzusammensetzung nach einem der Ansprüche 1 bis 8, **dadurch gekennzeichnet, dass** die Gewichtsmenge von Polymer (P), bezogen auf das Gesamtgewicht der Polymerzusammensetzung, mindestens 5 Gew.- % und höchstens 95 Gew.- % beträgt.

10. Polymerzusammensetzung nach Anspruch 9, **dadurch gekennzeichnet, dass** die Gewichtsmenge von Polymer (P), bezogen auf das Gesamtgewicht der Polymerzusammensetzung, mindestens 45 Gew.- % und höchstens 85 Gew.- % beträgt.

11. Polymerzusammensetzung nach einem der Ansprüche 1 bis 10, **dadurch gekennzeichnet, dass** das Gewichtsverhältnis von faserförmigem Füllstoff (A1) zu nicht faserförmigem Oberflächenmodifizierungsmittel (A2) [Gewichtsverhältnis (A1/A2)] mindestens 0,1 und höchstens 10 beträgt.

12. Polymerzusammensetzung nach Anspruch 11, **dadurch gekennzeichnet, dass** das Gewichtsverhältnis von faserförmigem Füllstoff (A1) zu nicht faserförmigem Oberflächenmodifizierungsmittel (A2) [Gewichtsverhältnis (A1/A2)] mindestens 0,3 beträgt.

13. Polymerzusammensetzung nach Anspruch 11, **dadurch gekennzeichnet, dass** das Gewichtsverhältnis von faserförmigem Füllstoff (A1) zu nicht faserförmigem Oberflächenmodifizierungsmittel (A2) [Gewichtsverhältnis (A1/A2)] höchstens 3 beträgt.

14. Polymerzusammensetzung nach Anspruch 11, **dadurch gekennzeichnet, dass** das Gewichtsverhältnis von faserförmigem Füllstoff (A1) zu nicht faserförmigem Oberflächenmodifizierungsmittel (A2) [Gewichtsverhältnis (A1/A2)] mindestens 0,3 und höchstens 3 beträgt.

15. Polymerzusammensetzung nach einem der Ansprüche 1 bis 14, **dadurch gekennzeichnet, dass** die Gewichtsmenge der Kombination (AC) [Gewichtsmenge (A1)+(A2)], bezogen auf das Gesamtgewicht der Polymerzusammensetzung, mindestens 2 Gew.- % und höchstens 70 Gew.- % beträgt.

16. Polymerzusammensetzung nach Anspruch 15, **dadurch gekennzeichnet, dass** die Gewichtsmenge der Kombination (AC) [Gewichtsmenge (A1)+(A2)], bezogen auf das Gesamtgewicht der Polymerzusammensetzung, mindestens 35 Gew.- % beträgt.

17. Polymerzusammensetzung nach einem der Ansprüche 1 bis 16, **dadurch gekennzeichnet, dass** es frei von jeglichem Polymer (P'), das von dem Polymer (P) und den gegebenenfalls in Kombination (AC) enthaltenen Polymeren verschieden ist, ist.

18. Formkörper, umfassend die Polymerzusammensetzung nach einem der Ansprüche 1 bis 17, **dadurch gekennzeichnet, dass** die Gewichtsmenge der Polymerzusammensetzung, bezogen auf das Gesamtgewicht des Formkörpers, mindestens 10 Gew.- % beträgt.

19. Formkörper nach Anspruch 18, bei dem es sich um ein zur Verwendung bei einer Reibungs- und Verschleißanwendung geeignetes Gleitteil handelt.

20. Formkörper nach Anspruch 19, der aus Lagern, Wälzlagerkäfigen, Druckscheiben, Buchsenscheiben, Buchsen, Dichtungsringen, Gleitstücken, Kabelträgern, Kugellagerkugeln, Stößeln und Zahnrädern ausgewählt ist.

21. Verfahren zur Herstellung eines Formkörpers nach einem der Ansprüche 18 bis 20, bei dem man die Polymerzusammensetzung aus Lösung verarbeitet, formpresst, zerspanend bearbeitet und/oder aus der Schmelze verarbeitet.

## Revendications

1. Composition polymère comprenant
(1) au moins une poly(arylétherdisulfone) [polymère (P)], et
(2) une combinaison (AC) d'additifs composée de
- au moins une charge fibreuse (A1) choisie dans le groupe constitué par les fibres de verre, les fibres d'amiante, les fibres de poly(benzothiazole), les fibres de poly(benzimidazole), les fibres de poly(benzoxazole), les fibres de polyaryléther, les fibres d'aramide, les fibres de carbone, les fibres de bore, les fibres métalliques, les fibres céramiques, les fibres de talc-verre, les fibres de silicate de calcium, les fibres de carbure de silicium et les fibres de borures métalliques, et
- au moins un modificateur de surface non fibreux (A2) choisi parmi les modificateurs de surface liquides et les modificateurs de surface particulaires, lesdits modificateurs de surface liquides et modificateurs de surface particulaires étant eux-mêmes choisis dans le groupe constitué par les huiles minérales, le polyacétate de vinyle, l'alcool polyvinylique, l'acide stéarique, les stéarates, les émulsions de cire, les cires solides, le graphite, le silicate en feuille, le talc, le kaolin, la silice, les sulfures métalliques, les huiles de silicone, les polyimides particulaires, les polymères à base d'éthylène, les lubrifiants céramiques en poudre, les oxydes métalliques, les carbures, les titanates, les halogénures métalliques, le nitrure de silicium, le borure de titane et les sulfates métalliques,
dans laquelle :
- plus de 50 % en moles des motifs récurrents du polymère (P) sont des motifs récurrents (R1) : 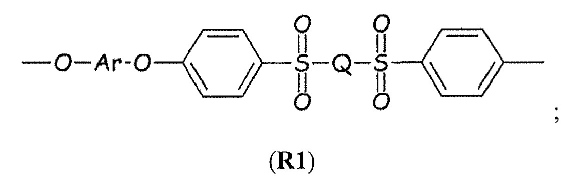
- Ar et Q, identiques ou différents, sont des radicaux divalents comprenant au moins un cycle aromatique ;
- Q est un radical divalent choisi parmi les structures suivantes : 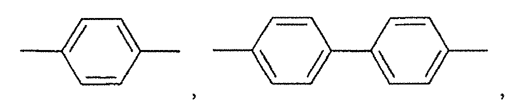 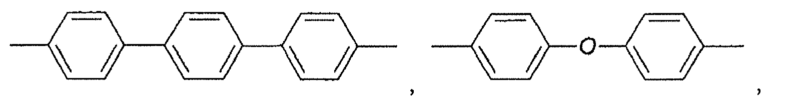 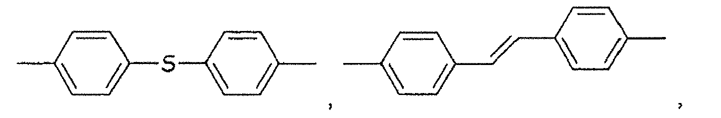 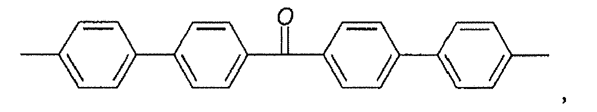 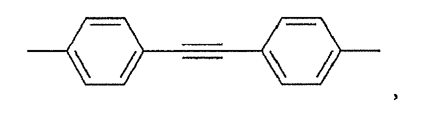 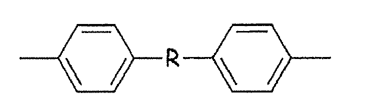
avec R étant : 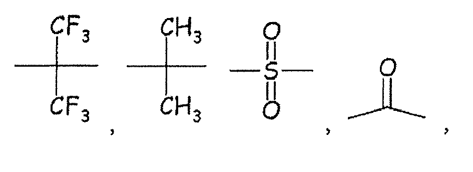 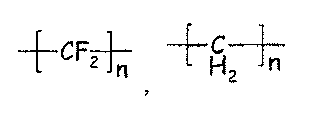 avec n étant un entier valant de 1 à 6, ou un groupe aliphatique divalent, linéaire ou ramifié, portant jusqu'à 6 atomes de carbone, et les mélanges de celles-ci ;
- Ar est un radical divalent choisi parmi les structures suivantes : 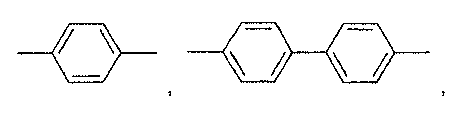 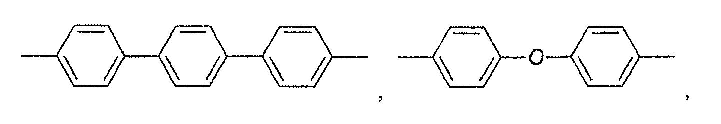 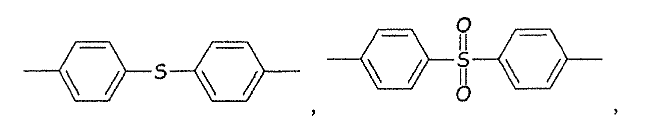 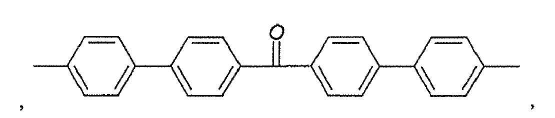 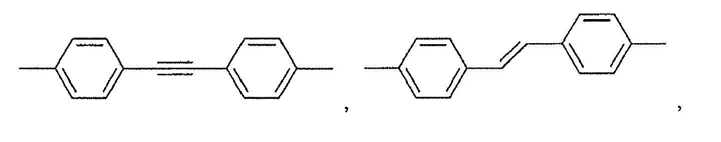 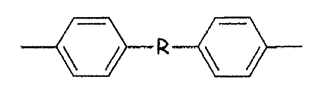
avec R étant : 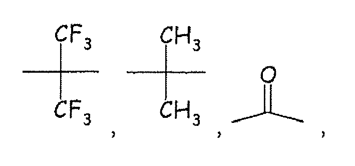 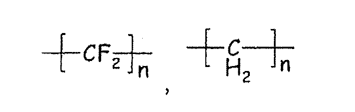 avec n étant un entier valant de 1 à 6, ou un groupe aliphatique divalent, linéaire ou ramifié, portant jusqu'à 6 atomes de carbone, et les mélanges de celles-ci.

2. Composition polymère selon la revendication 1, **caractérisée en ce que** la charge fibreuse (A1) est choisie dans le groupe constitué par les fibres de carbone, les fibres de verre, les fibres de poly(benzothiazole), les fibres de poly(benzimidazole), les fibres de poly(benzoxazole), les fibres de polyaryléther et les fibres d'aramide.

3. Composition polymère selon la revendication 1 ou 2, **caractérisée en ce que** le modificateur de surface non fibreux (A2) est choisi dans le groupe constitué par les huiles de silicone, le graphite et le nitrure de bore hexagonal.

4. Composition polymère selon l'une quelconque des revendications 1 à 3, **caractérisée en ce que** les motifs récurrents (R1) sont choisis parmi : 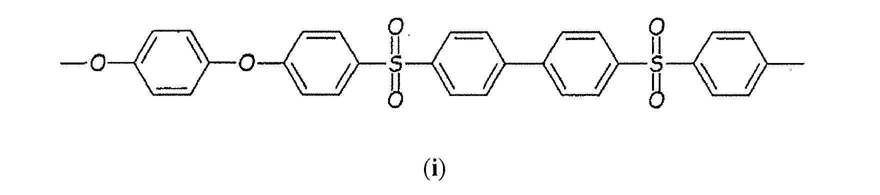 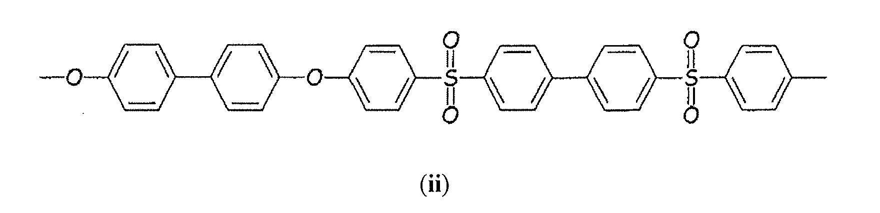 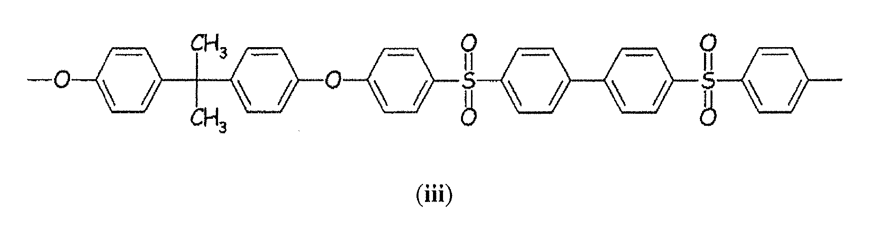 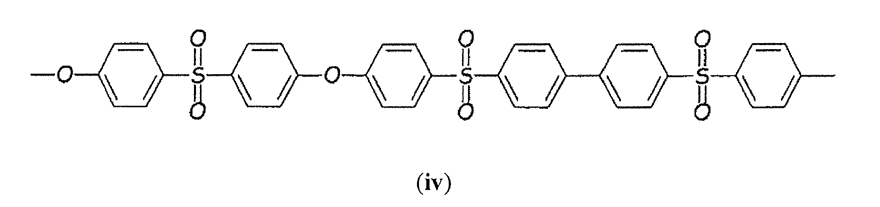 et leurs mélanges.

5. Composition polymère selon l'une quelconque des revendications 1 à 4, **caractérisée en ce que** tous les motifs récurrents du polymère (P) sont des motifs récurrents (R1).

6. Composition polymère selon l'une quelconque des revendications 1 à 5, **caractérisée en ce que** les motifs récurrents (R1) sont :

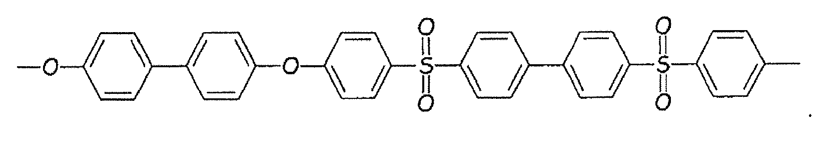

7. Composition polymère selon l'une quelconque des revendications 1 à 6, **caractérisée en ce que** le polymère (P) a une température de transition vitreuse d'au moins 240°C, mesurée par calorimétrie différentielle à balayage, dans laquelle :
- le polymère (P) est soumis au cycle de refroidissement/chauffage suivant :
premier chauffage de la température ambiante à +320°C à une vitesse de 10°C/min, suivi d'un refroidissement de +320°C à la température ambiante à une vitesse de 20°C/min, suivi d'un deuxième chauffage de la température ambiante à +320°C à une vitesse de 10°C/min ;
- la température de transition vitreuse est mesurée pendant le deuxième chauffage, et déterminée par une procédure de construction sur la courbe de flux thermique : une première tangente à la courbe au-dessus de la région de transition est construite ; une deuxième tangente à la courbe en dessous de la région de transition est également construite ; la température sur la courbe à mi-chemin entre les deux tangentes est la température de transition vitreuse.

8. Composition polymère selon l'une quelconque des revendications 1 à 7, **caractérisée en ce que** le polymère (P) a une température de déflexion à la chaleur d'au moins 230°C, mesurée sous une charge de 1,82 MPa (264 psi) selon la norme ASTM D-648.

9. Composition polymère selon l'une quelconque des revendications 1 à 8, **caractérisée en ce que** la quantité pondérale de polymère (P) par rapport au poids total de la composition polymère est au moins de 5 % en poids et au plus de 95 % en poids.

10. Composition polymère selon la revendication 9, **caractérisée en ce que** la quantité pondérale de polymère (P) par rapport au poids total de la composition polymère est au moins de 45 % en poids et au plus de 85 % en poids.

11. Composition polymère selon l'une quelconque des revendications 1 à 10, **caractérisée en ce que** le rapport pondéral de la charge fibreuse (A1) sur le modificateur de surface non fibreux (A2) [rapport pondéral (A1)/(A2)] vaut au moins 0,1 et au plus 10.

12. Composition polymère selon la revendication 11, **caractérisée en ce que** le rapport pondéral de la charge fibreuse (A1) sur le modificateur de surface non fibreux (A2) [rapport pondéral (A1)/(A2)] vaut au moins 0,3.

13. Composition polymère selon la revendication 11, **caractérisée en ce que** le rapport pondéral de la charge fibreuse (A1) sur le modificateur de surface non fibreux (A2) [rapport pondéral (A1)/(A2)] vaut au plus 3.

14. Composition polymère selon la revendication 11, **caractérisée en ce que** le rapport pondéral de la charge fibreuse (A1) sur le modificateur de surface non fibreux (A2) [rapport pondéral (A1)/(A2)] vaut au moins 0,3 et au plus 3.

15. Composition polymère selon l'une quelconque des revendications 1 à 14, **caractérisée en ce que** la quantité pondérale de combinaison (AC) [quantité pondérale de (A1)+(A2)], par rapport au poids total de la composition polymère, est au moins de 2 % en poids et au plus de 70 % en poids.

16. Composition polymère selon la revendication 15, **caractérisée en ce que** la quantité pondérale de combinaison (AC) [quantité pondérale de (A1)+(A2)], par rapport au poids total de la composition polymère, est au moins de 35 % en poids.

17. Composition polymère selon l'une quelconque des revendications 1 à 16, **caractérisée en ce qu'**elle est dépourvue de tout polymère (P') autre que le polymère (P) et les polymères éventuellement compris dans la combinaison (AC).

18. Article façonné comprenant la composition polymère selon l'une quelconque des revendications 1 à 17, **caractérisé en ce que** la quantité pondérale de la composition polymère par rapport au poids total de l'article façonné est au moins de 10 % en poids.

19. Article façonné selon la revendication 18, qui est une pièce de glissement appropriée pour être utilisée dans une application de frottement et d'usure.

20. Article façonné selon la revendication 19, qui est choisi parmi les paliers, les cages de roulement antifriction, les rondelles de butée, les rondelles de bague, les bagues de réduction, les bagues d'étanchéité, les glissières, les supports de câbles, les billes de roulement à billes, les galets de came et les éléments dentés.

21. Procédé de fabrication de l'article façonné selon l'une quelconque des revendications 18 à 20, qui comprend le traitement en solution, le moulage par compression, l'usinage et/ou le traitement à l'état fondu de la composition polymère.
